# EUROPEAN PATENT SPECIFICATION

(11) **EP 3 261 952 B1**
(45) Date of publication and mention of the grant of the patent: **16.06.2021**
(21) Application number: 16714548.1
(22) Date of filing: 31.03.2016
(51) Int. Cl.: B65B 9/02, B65B 9/04, B65B 25/00, B65B 51/16, B65B 51/22, B65B 61/08, B65B 61/18, B65D 75/32, B65D 75/44, B65D 75/58, B65D 85/60, B29C 65/08, B29C 65/00, B29K 705/02

(54) **APPARATUS AND METHODS TO FORM A FOOD PRODUCT PACKAGE**
VORRICHTUNGEN UND VERFAHREN ZUR FORMUNG EINER LEBENSMITTELPRODUKTVERPACKUNG
APPAREILS ET MÉTHODES POUR FORMER UN PAQUET DE PRODUITS ALIMENTAIRES

(30) Priority: 02.04.2015 GB 201505793
(43) Date of publication of application: 03.01.2018
(73) Proprietor: Kraft Foods Schweiz Holding GmbH, 6300 Zug (CH)
(72) Inventor: DHADDA, Jaswinder Singh, Deerfield, Illinois 60015 (US); DAMISETTY, Naveen, Birmingham, B30 2LU (GB); MEHENDALE, Sameer, Deerfield, Illinois 60015 (US); SAGY, Arthur A, Deerfield, Illinois 60015 (US); KIM, Grace Jiyoung, Deerfield, Illinois 60015 (US)
(74) Representative: Appleyard Lees IP LLP
(86) International application number: PCT/IB2016/051860
(87) International publication number: WO 2016/157132

(56) References cited:
- EP-A2- 2 292 411
- WO-A1-98/56568
- WO-A1-2008/107341
- WO-A1-2010/065980
- WO-A2-2004/007292
- US-A- 4 279 344
- US-A- 4 684 025

## Description

The present invention relates to the packaging of products such as food items, which may especially, though not exclusively, be in the form bars or blocks or the like (e.g. chocolate bars).

The packaging of food products in mass production typically involves wrapping a food item within a single sheet of packaging material. Traditionally, two longitudinal edges of packaging material are brought together and bonded to each other to form a longitudinal seal thereby shaping the packaging material into a tube containing the food product. Finally, two transverse end seals are formed to close the tube at opposite ends of the food product thereby to encapsulate the product in the closed packaging.

The seals formed in this way may be cold seals formed using an applied (printed) adhesive along the seals. This requires pre-application of adhesive along specific parts of the packaging material, followed by the pressing together of the packaging material at those parts to pressure-activate the adhesive. This has the disadvantage that delivery of insufficient or misplaced adhesive to the specific parts of the packaging material, or insufficient pressure activation there, or subsequent degradation of the adhesive, can easily lead to poor seal strength. The seal is then prone to ingress of air to the sealed product which may damage it or render it unfit for sale. Attempt to account for this vulnerability have included forming relatively wide seals including a greater surface of the packaging material and glue. This leads to the use of more packaging materials and a larger product package overall.

Alternatively, heat-based seals may be formed by heating the packaging material along specific parts to be bonded, by a degree sufficient to melt the sealant layer of the material and fuse parts of the sheet together. This has a disadvantage that the applied heat may damage the wrapped product and typically means that heat-formed package seals are formed sufficiently far from the wrapped product to minimise heat transfer into the product during seal formation. The result is a packaging in which the product may be relatively loosely wrapped within its packaging and prone to movement and damage within it. The heating process is also relatively slow since enough dwell time must be provided during the sealing operation to permit sufficient heat to melt the packaging material at the seal region.

Both of the above sealing techniques are vulnerable to the loss of seal integrity, or increased seal weakness, due to particles of the food product being present in the seal between the two parts of the packaging material. This seal contamination forms a barrier between the packaging parts intended to otherwise be bonded.

WO 2008/107341 A1 and EP0232931 disclose apparatus and methods for ultrasonically welding a plurality of seals between a first web and a second web to form food product packages.

The invention is defined by the appended claims.

The invention relates to packaging by wrapping, and to wrapped products. The terms 'wrapping' and 'wrapped' are generally understood by the skilled person to mean, for example: enclose in something wound or folded about; to wind, fold, or bind (something) about as a covering; to cover (something) by winding or folding a piece of material around it.

The food product may be substantially mechanically firm (i.e. not easily deformable, compliant, malleable, fluid or liquid) in composition or structure. The wrapping may be forced by the food product to adopt substantially the shape of the food product at those parts of the food product wrapped by the wrapping.

It may be provided a packaged food product comprising the food product wrapped within a packaging comprising a single web of material folded around the food product such that a first region of the web extends over a second region of the web to which it is joined by an ultrasonically generated seal comprising a side seal portion which extends along the web adjacent to a side of the food product, and two separate end seal portions which each extend across a part of the web adjacent to opposite respective ends of the food product and which each terminate at the side seal portion to collectively enclose the wrapped food product within the folded web. Preferably, the surface area of the second region of the web at one side of the packaging located between the opposite end seals exceeds the surface area of the first region of the web at the other side of the packaging located between the opposite end seals such that a greater proportion of the wrapped food product is embraced by the second region of the web than is embraced by the first region of the web. The use of a packaging seal formed ultrasonically has been found to provide high seal strength and integrity without producing unacceptable amounts of heat during the seal-formation process. In this way a strong seal, not requiring adhesives, may be formed closer to the body of the packaged product (e.g. chocolate) without the heat damage to the product.

The inventors have found that the wrapping of a food product more tightly than in existing wrappings, may be possible without damage to the wrapped product. In another aspect, it may be provided a packaged food product comprising the food product wrapped within a packaging comprising a first web of material ultrasonically welded to a second web of material to form a seal comprising a plurality of seal portions extending adjacent to sides of the food product to collectively enclose the wrapped food product between the first web and the second web. The surface area of the second web exceeds the surface area of the first web such that a greater proportion of the wrapped food product is embraced by the second web than is embraced by the first web.

In this way, a tightly-wrapped product may be provided in which the second web is wrapped around a greater proportion of food product than is the first web, thereby securing the position of the product within the packaging and permitting relative movement to be reduced. The first web of material and the second web of material may be formed from separate webs and the plurality of seal portions may fully surround the food product to form a closed seal to enclose the wrapped food product between the first web and the second web. The pulling together of edges of a single sheet of packaging material is avoided thereby reducing compression of the wrapped product by the packaging. Alternatively, the first web of material and the second web of material may be formed from a common web within which they join at a longitudinal fold therein to overlap, and seal portions of the plurality of seal portions may extend to the fold therewith to surround the food product to collectively enclose the wrapped food product between the first web and the second web of the common folded web. The longitudinal fold preferably forms a fold line (e.g. a crease).

The surface area of the second web surrounded by the seal, or extending between opposite seal portions, preferably exceeds the surface area of the first web surrounded by the seal, or extending between opposite seal portions, such that a greater proportion of the wrapped food product is embraced by the second web than is embraced by the first web. One, some or each of the seal portions is preferably substantially linear, though curved seal portions are possible such as to accommodate a curved food product. Linearity tends to reduce the occurrence of unwanted folds, gatherings or pleats forming in a web when flexed, or curved, over/against the food product.

The second web is preferably partially wrapped around or adjacent a top surface and opposite side surfaces and/or end surfaces of the product. The second web may be generally concave in shape and the food product may reside within the concavity. The second web may be forced to adopt substantially the shape of the food product at those parts of the food product wrapped/covered by the second web. The first web may be substantially or generally flat. The seal may define some of or the whole of the terminal edges of the packaging. The materials of the first and second web may differ or may be the same.

The seal is a preferably a hermetic seal. Preferably, the seal remains intact when the packaged product is subject to ambient pressure less than about 0.67 times atmospheric pressure (20 inches of Hg). The seal may comprise a plurality of closely-spaced discrete weld spots forming a pattern of array of spots extending along at least a part of the length of the seal. The width of the seal at some or substantially all of its length may preferably be less than 1.0cm in width, and more preferably not more than 0.8cm in width and yet more preferably not more than 0.6cm in width, and even more preferably not more than 0.5cm in width. The seal preferably comprises weld array or pattern (e.g. array of weld spots, stripes or crosses) extending along at least a part of the length of the seal. It may comprise a plurality of closely-spaced discrete welds forming a pattern of welds. The discrete welds may comprise weld spots forming a pattern of weld spots, e.g. a regular, uniform or repeating pattern. The discrete welds may comprise weld stripes or crosses forming a pattern of weld stripes or crosses.

Selection of a weld pattern density, such as spot density (e.g. no. of spots/area), may vary according to the thickness of the web material and what type/strength/width of seal to be achieved. Web material may be generally the light/thin to medium thickness packaging material. A relatively thin web material with a less dense spot weld pattern might not permit the seal to be a hermetic seal (a desirable seal) because there is less web material to ultrasonically melt and flow. A relatively thicker web material and/or with a denser weld pattern could be selected if required. Ultrasonic sealing (as opposed conduction/heat sealing) directs ultrasonic energy directly into the web material (in the form of vibrations). Web material is compressed and relaxed at e.g. 40,000 times per second (e.g. in a 40 KHz ultrasonic horn/anvil system) throughout the material. Other frequencies may be used. This means that the parts of the web material (which may typically be a layered/laminate structure) with the lowest melt temperature will melt first, regardless of where it is in the layers/body of the web material. However, in conduction/heat sealing, heat must pass heat through one layer to the next, working its way inwards into the body of the material by conduction from the surface. This results in having a dwell time to allow heat to conduct sufficiently into the web material. This renders the heat-sealing process relatively slower.

Weld spots may be termed fine, medium, or coarse for example, depending upon the requirements of the seal. A fine pattern may comprise weld spots having diameter/width in the range of .0075"-.0125" (e.g. squares, circles etc.). A medium pattern may comprise weld spots having diameter/width in the range of .0125"-.0175", and a coarse pattern may comprise weld spots having diameter/width in the range of .0175" or larger. The spacing between weld spots (e.g. squares) may be the same as the diameter/width of an/each spot (e.g. length of the square's edge). For example a pattern of square weld spots being each .015" x .015" square, may have a spacing between squares of .015" as well. The depth/height of the weld spots (e.g. squares) as measured from the adjacent un-welded surface of the material of the web (e.g. between weld spots or at an edge of a seal) may be between 0.0025 inches 0.0125 inches (e.g. 0.003", or 0.005", or 0.010").

Each type of web material will influence the appropriate combination of spot (e.g. square) size and spot (e.g. square) depth/height that will work best. For example a pattern may comprise squares each about 0.015" x 0.015" square and about 0.005" tall with sides angled at about 45 degrees to the longitudinal edge of the weld pattern/seal they collectively form. Of course, other pattern combinations are possible.

The web material may be a plastics material, or a laminar foil: e.g. a metallic foil (e.g. Aluminium) laminated/coated with a plastics material, or vice versa. Web materials commonly used in the art for wrapping/sealing food products are suitable. Bi-Oriented PolyPropylene (BOPP), Cast PolyPropylene (CPP) or Polyester film (PET) are just a few examples.

Ultrasonic frequencies between about 20kHz and about 70kHz may be used as required/suitable.

The packaging may include a peripheral edge portion comprising unsealed adjacent tabs of both the second web and the first web extending together outwardly from the seal and arranged to be manually separated by pealing apart to break the seal. The tabs may be pulled apart by gripping each tab separately between the finger and thumb of opposite hands and pealing apart. The adjacent tabs may be ultrasonically sealed together at one or each of the terminal sides of the tabs thereby leaving the terminal tab ends free at a terminal end of the packaging to be splayed for pealing. The portion of the seal and the sealed terminal tab sides may collectively define together with the free tab ends a pocket defining an opening splayable to receive a finger or thumb end(s) for gripping respective of the two tabs for pealing apart. The sealing of the terminal tab sides holds the tabs in a generally side-by-side, or overlapping repose in the quiescent state and helps to avoid damage to them during general handling of the packaged product.

The peak peal strength of the seal required to separate the webs at the seal by pealing apart the tabs may be between 0.5 lbs/in and 3.0 lbs/in, or preferably between 0.75 lbs/in and 2.5 lbs/in, or more preferably between 1 lbs/in and 2 lbs/in. The peak peal strength may be a measure of the force applied to each tab concurrently in opposite directions perpendicular to the direction of the portion of the seal from which the tabs extend, divided by the length of that portion of seal. This may be measured using an Instron apparatus obtainable from the following supplier, and by applying methods as would be known to the skilled person in this art:
INSTRON, 825 University Ave., Norwood, MA 02062-2643, USA. Testing may be done by cutting 1" wide strips of two sealed webs portions and, using an Instron apparatus, identifying the force required to break/peal the seal which is a common method for measuring peal seal integrity.

Preferably, the tabs are dimensioned to be easily gripped between the finger and thumb of both hands simultaneously. The tabs may each extend from an edge portion of the seal at least 1cm long such that each tab is preferably at least 1cm wide. More preferably the tabs may each extend from an edge portion of the seal which is between about 1cm and about 3cm wide, or more preferably between about 1cm and 2cm wide. Each tab may extend from the seal by at least 0.25cm, such that each tab is preferably at least 0.35cm long. More preferably, each tab may extend from the seal by between about 0.35cm and about 2.0cm, or more preferably between about 0.4cm and 2.0cm. For example, about 0.5cm is suitable to allow for the finger reach of adults and children.

The inventors have been surprised to find that ultrasonic seals may be formed closer to the wrapped food product than expected without heat damage to that product, even when comprising chocolate of other materials prone to melting. Preferably, a distance between parts of the seal located at opposite sides of the wrapped product exceeds a corresponding transverse dimension of the wrapped food product by a proportion not exceeding about 10 percent of that transverse dimension. More preferably, the proportion does not exceed about 7 percent, or more preferably about 5 percent of that transverse dimension. This enables a tight wrapping which reduces usage of packaging materials and results in less movement of the product within the packaging. The transverse dimension may be the width of the food product, or may be the length of the product (or both).

The food product may comprise chocolate, and may be a bar or block. The food product is preferably substantially mechanically firm (i.e. not easily deformable, compliant, malleable, fluid or liquid) in composition or structure. It may comprise solid chocolate, or a chocolate shell containing a filling (solid or fluid), or a chocolate coated item of non-chocolate composition (e.g. a biscuit, wafer etc), or may comprise a wholly different food product such as a meat product. The food product may be a meltable product which melts when heated. Examples include chocolate products, ice-cream products or frozen products (e.g. ice lollies) intended to be wrapped when frozen or cooled to a non-liquid (e.g. solid) state.

The invention provides an apparatus according to claim 1. The two separate ultrasonic horns and/or ultrasonic anvils may be arranged to form substantially mutually parallel said separate seals.

In a further aspect, the invention provides an apparatus according to claim 3.

The ultrasonic horn and/or ultrasonic anvil are preferably arranged to form the seal to be substantially parallel to the longitudinal fold. The ultrasonic sealer may be a rotary ultrasonic sealer comprising a rotary anvil and a rotary ultrasonic horn arranged to rotate in conjunction with the rotary anvil to form the seal.

In a third aspect, the invention provides a method according to claim 4.

In a further aspect, the invention provides a method according to claim 5.

One, some or each of the seals, or longitudinal seal and/or end seals may be substantially linear. The seals may be substantially parallel and/or the end seals are substantially parallel.

The method may include forming a said seal, and/or longitudinal seal and/or end seal as a weld array extending along at least a part of the length of the seal.

The method may include forming a seal, and/or longitudinal seal and/or end seal as a plurality of closely-spaced discrete welds forming a pattern of welds. The discrete welds may comprise weld spots forming a pattern of weld spots. The discrete welds may comprise weld stripes or crosses forming a pattern of weld stripes or crosses.

The first web may be an elongate sheet. The second web is preferably an elongate sheet with a transverse width exceeding that of the first web. The seals may be formed by rotating a rotary ultrasonic horn in conjunction with a corresponding rotary ultrasonic anvil and passing the first and second webs between the horn and anvil and thereat welding the first and second webs together. The use of rotary ultrasonic horn and anvil permits high rates of throughput of web material and products conveyed there between. The method may include passing the first web and the second web between the rotary ultrasonic horn and the rotary ultrasonic anvil at a rate of at least 400 ft/min, or more preferably at least 500ft/min, or yet more preferably at least 600 ft/min.

The anvil may be patterned (e.g. knurled) with a pattern arranged to produce, in conjunction with the horn, a weld pattern comprising a plurality of weld spots. Pleats or folds may tend to form as a result of the curvature of the second web around the food product resulting in a concave web shape which, when pressed flat against the first web during end-seal formation, forms gathers and folds within itself. The inventors have been surprised to find that effective ultrasonic end seals may be formed even when material gathers into folds or pleat-like structures which form in the second web of the material at an end seal. The fold or pleat of the second material has been found to form an effective self-seal ultrasonically as well as a seal with the first web.

The method may include forming at least a part of the seal as a plurality of closely-spaced discrete weld spots forming a pattern of array of spots extending along at least a part of the length of the seal. The seal may be formed to have a peak peal strength required to separate the webs at the seal by pealing apart the tabs may be between 0.5 lbs/in and 3.0 lbs/in, or preferably between 0.75 lbs/in and 2.5 lbs/in, or more preferably between 1 lbs/in and 2 lbs/in. The sealing operation may be influenced by the following parameters within the sealing operation; Time, Pressure & Temperature. The time parameter may be controlled by controlling the speed of formation of the welds, temperature is controlled by control of the ultrasonic energy input to the ultrasonic sealing process (Amplitude/Frequency control) and the pressure parameter may be controlled by controlling the mechanical distance between the two webs as they are pressed between ultrasonic horn and anvil.

The method may include forming (e.g. by cutting the webs) at a peripheral edge portion of the packaging at least two unsealed adjacent tabs of the second web and the first web respectively, extending together outwardly from the seal and arranged to be manually separated by pealing apart to brake the seal. The tabs may be pulled apart by gripping each tab separately between the finger and thumb of opposite hands and pealing apart. The method may include ultrasonically sealing together adjacent tabs at one or each of the terminal sides of the tabs thereby leaving the terminal tab ends free at a terminal end of the packaging to be splayed for pealing. The portion of the seal and the sealed terminal tab sides may collectively define together with the free tab ends a pocket defining an opening splayable to receive a finger or thumb end(s) for gripping respective of the two tabs for pealing apart. The method may include cutting the webs to define tabs of desired dimensions.

Preferably, the method includes forming the seals at locations at opposite sides of the product separated by a separation which exceeds a corresponding transverse dimension of the food product therebetween by a proportion not exceeding about 10 percent of that transverse dimension. More preferably, the proportion does not exceed about 7 percent, or more preferably about 5 percent of that transverse dimension.

Exemplary but non-limiting embodiments of the invention shall now be described with reference to the following drawings of which:
Figure 1 is a plan view of a packaged food product according to an embodiment of the invention;
Figure 2 is an end view of the packaged food product illustrated in Figure 1 showing unsealed end tabs for peeling the packaging apart;
Figure 3A and Figure 3B show schematic plan views of a packaged food product;
Figure 3C schematically illustrates a perspective and cross-sectional view of the packaged food product of Figures 1 and 2;
Figure 4 shows a plan view of a fully peeled packaging;
Figure 5 shows an end view of an ultrasonic seal of the packaging of Figures 1 and 2 comprising an plurality of closely-spaced discrete weld spots;
Figure 6 schematically illustrates three lanes of packaged food products in which each food product is individually ultrasonically sealed between a common length of a first web and a second web of material prior to separation of the packaged food products by cutting the common webs;
Figure 7A illustrates a view of a rotary patterned ultrasonic anvil in conjunction with a rotary ultrasonic horn;
Figure 7B illustrates schematically, a side-view of the ultrasonic apparatus of Figure 7A in conjunction with a first and second web of material for packaging;
Figure 8 schematically illustrates a production line for producing packaged food products;
Figure 9 schematically illustrates a three-lane production line for producing three lanes of packaged product such as is illustrates in Figure 6;
Figure 10 schematically illustrates the successive functional elements of the production line illustrated in Figure 9;
Figure 11 illustrates a relative arrangement of a plurality of ultrasonic anvils for use in conjunction with ultrasonic horns in a multi-lane packaging production line;
Figure 12 graphically illustrates a relative positioning of the array of ultrasonic anvils of Figure 11 in an alternative spatial arrangement;
Figure 13 graphically illustrates a further relative spatial arrangement of ultrasonic anvils in a multi-lane food packaging production line;
Figure 14 schematically shows a cross-sealing station;
Figure 15 schematically shows a first and second wed of material joined at a fold line within a common web, abd a food product wrapped according to the first and second web via a three-part ultrasonic seal;
Figure 16 shows an exploded view of a weld spot array of an ultrasonic seal.

In the drawings like articles are assigned line reference numerals for consistency.

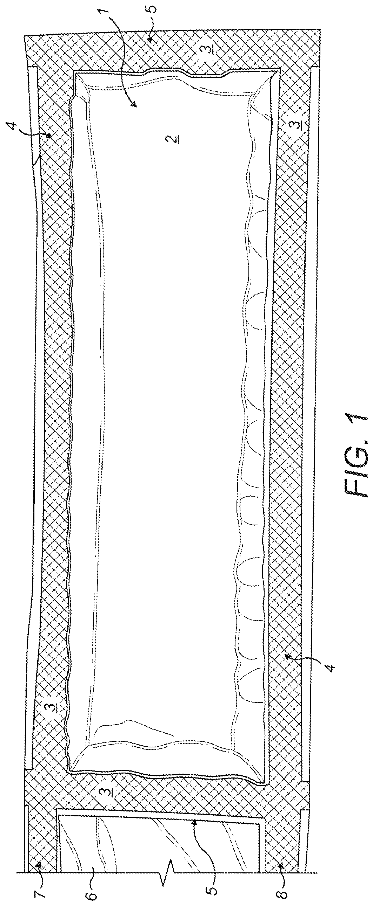

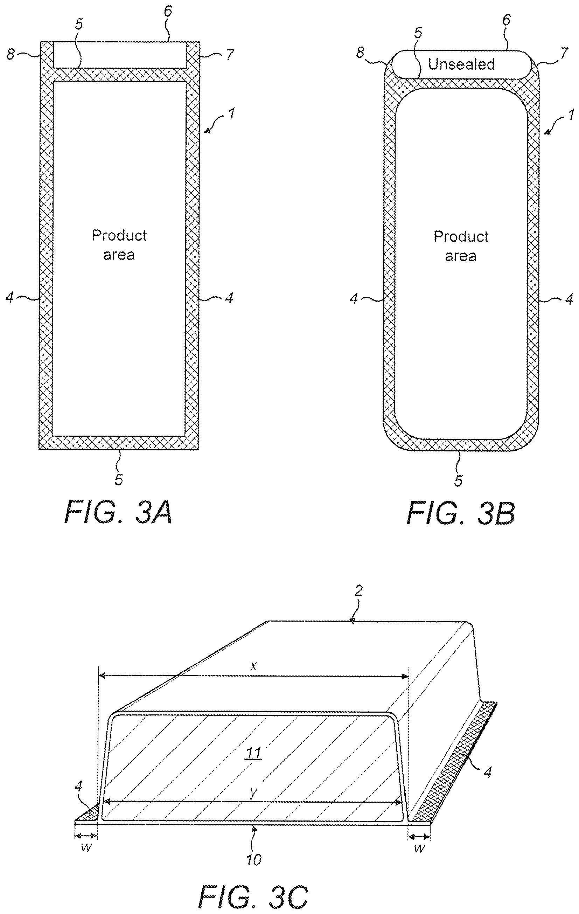

Referring to Figure 1, there is shown a plan view of a packaged food product (1) which contains within it a wrapped food product, such as a solid bar of chocolate. The packaging which wraps the food product comprises a second web of material (2) which is ultrasonically welded to an underlying first web of material (10, Figure 3C) to form a closed ultrasonic seal (3) which fully surrounds and encloses the food product between the second web of packaging material (2) and the underlying first web of packaging material (10, Figure 3C). The ultrasonic seal comprises four substantially linear seal portions which extend adjacent to the sides of the packaged food product so as to collectively enclose it.

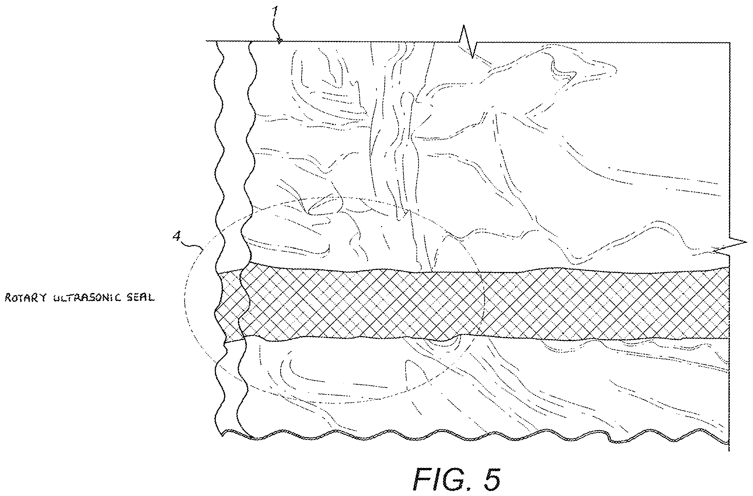

The packaged food product is elongated and substantially rectangular in shape with a length exceeding its width and a thickness less than both its length and width so as to define a rectangular slab shape. A pair of parallel side seal portions (4) extend along, and in close adjacency to, the opposite long edges of the slab from one end of the slab to the other, and at each end of the slab the side seals are bridged by an end seal (5) portion closely adjacent to the end of the slab. This forms a continuous rectangular seal which closely follows the peripheral sides of the slab shape of the product. Each of the side seals and the end seals comprises a linear array of a plurality of closely-spaced discrete weld spots shown in more detail in Figure 5. The width (W) of the array of spots in each seal portion is approximately 4mm such that the width of each seal portion is substantially consistently 4mm along its length.

Figures 3A to 3C schematically show the web materials of the packaging, in relation to the packaged food product. In Figure 3A the packaged food product presents a plan profile with substantially right-angular packaging corners, such as is illustrated in Figure 1, whereas in alternative arrangements the right-angular corners may be trimmed to a rounded shape such as is shown in Figure 3B.

Referring to Figure 3C, a cross-sectional perspective view of the packaged food product is presented illustrating the wrapped food product (11) contained between a first web of material (10) and a second web (2) of packaging material. The side seal portions (4), and also the end seal portions (5, not visible in Figure 3C) are formed closely adjacent to the peripheral edges of the slab of food product (11) such that a distance (X) between parts of the seal, for example opposite parts of the two parallel side seal portions (4), exceeds a corresponding transverse dimension (Y) of the food product, such as the width of the food product located between the side seals, by a proportion which does not exceed about 10% of the transverse dimension (e.g. width) of the slab of the food product. More preferably the distance between opposite parts of the seal at opposite sides of the wrapped product is no more than 5% greater than the width of the wrapped product there. In this way, the wrapped product is relatively tightly wrapped by the two webs of ultrasonically joined webbing material (2,10). This greatly assists in securely locating the food product (11) firmly within the packaging and also helps to reduce the amount of webbing material which might otherwise be required to wrap the food product. That is to say, by efficiently and tightly wrapping the food product, less packaging material is required.

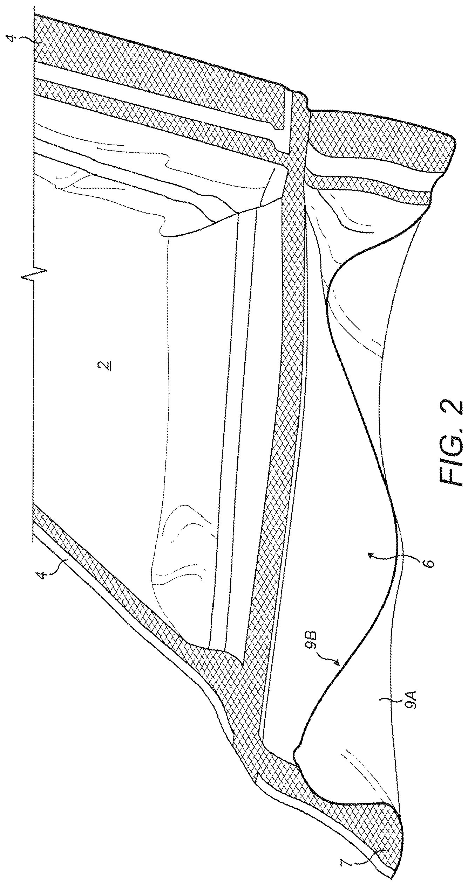

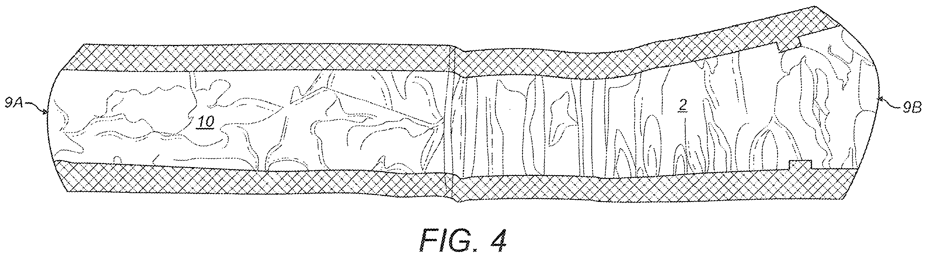

The surface area of the second web (2) of packaging material located within the perimeter defined by the rectangular seal (3) is greater than the surface area of the first web (10) located within and surrounded by that same rectangular seal. This means that a greater proportion of the wrapped food product (11) is wrapped by the second web of material (2) than is wrapped by the first web (10). As is schematically illustrated in Figure 3C, the second web of material (10) is generally or substantially flat and may serve as the underside of the packaged food product, whereas the second web of material is formed into a convex blister formation in which it is spaced from the first web of material (10) by a spacing sufficient to snugly admit and retain the food product (11) at all parts other than those where the second web converges towards the first web to meet it at the ultrasonic seal (3) surrounding the food product. Referring to Figure 2, and Figures 3A and 3B, the packaging includes a peripheral edge portion (6) comprising unsealed adjacent tabs (9A, 9B) formed from the second web of material (2) and the first web of material (10), respectively. These tabs of unsealed web material each extend together outwardly from and end sealed portion (5) and are somewhat splayed due to the relatively greater surface area of the tab provided by the second web of material relative to the surface area of the tab provided by the first web of material. The elongate side seal portions (4) of the packaging extend continuously transversely across opposite terminal ends of the end seal portion (5) from which the unsealed tabs also extend. This means that the opposite terminal sides of the two tabs are ultrasonically sealed together leaving only the distal edges of each tab furthest from, and parallel to, the adjacent end seal (5), free and unsealed. This defines a pocket formation, which can be seen in Figure 2, dimensioned to receive two finger tips of opposite hands of a user as the user pinches between finger and thumb of each one of two hands, a respective one of the two tabs thereby to grip them and subsequently peel apart the tabs to separate the adjacent end seal portion and subsequently the parallel side seal portions (4) extending from that end seal portion along the sides of the packaged product, in order to open the packaging and reveal the product, for consumption or otherwise. The result of such continuous peeling is illustrated in Figure 4.

The ultrasonic seal (3) is constructed and arranged to require a peak peel strength required to separate the seal of between about 0.5 lbs/in and 3 lbs/in, preferably about 2 lbs/in. This peak peel strength is measurable by measuring the force applied concurrently to each tab equally and in opposite directions perpendicular to the length of the seal - thereby to pull apart the tabs (9A,9B). The force is normalised according to (e.g. divided by) the length of the portion of the seal at which separation is taking place. The peak peal strength so measured may be the peak value detected while a seal is pealed apart over a predefined period of time, optionally at a substantially constant rate (e.g. rate of movement of the peal location along the seal) of separation of the seal

This measurement may be performed on an apparatus such as an Instron apparatus (as described above) such as would be readily apparent to the skilled person. Typically the peak peal strength occurs at the point/instant that the seal is initially broken.

The tabs preferably freely extend from a length of the end seal portion (5) which is at least 1cm in length such that each tab is preferably at least 1cm in width, which has been found to be a preferable minimal width for admitting finger tips of a user for peeling the wrapping. Preferably each of the tabs extends from the end seal portion by a distance of at least 0.5cm for this reason.

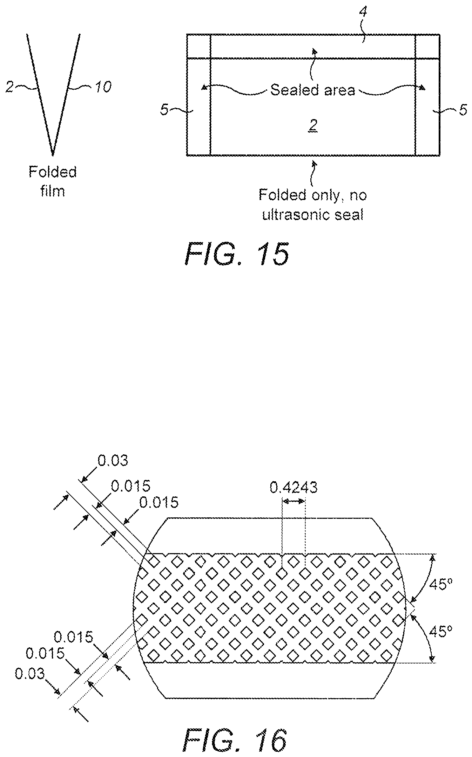

The ultrasonically formed seal is a hermetic seal and measurements have shown that the seal surrounding a packaged product will remain intact when the packaged product is subjected to an ambient pressure which is less than about 0.67 atmospheres (e.g. 20 inches of Hg). This gives an indication of the preferred strength of the seal provided by the patterned array of weld spots illustrated in Figure 5. Figure 16 shows a further example in more detail. Here, the weld spot pattern comprises a regular array of weld squares each about 0.015" x 0.015" square and about 0.005" deep with sides angled at about 45 degrees to the longitudinal edge of the weld pattern/seal they collectively form. The pitch between weld spots is about 0.4243". Of course, other pattern combinations are possible.

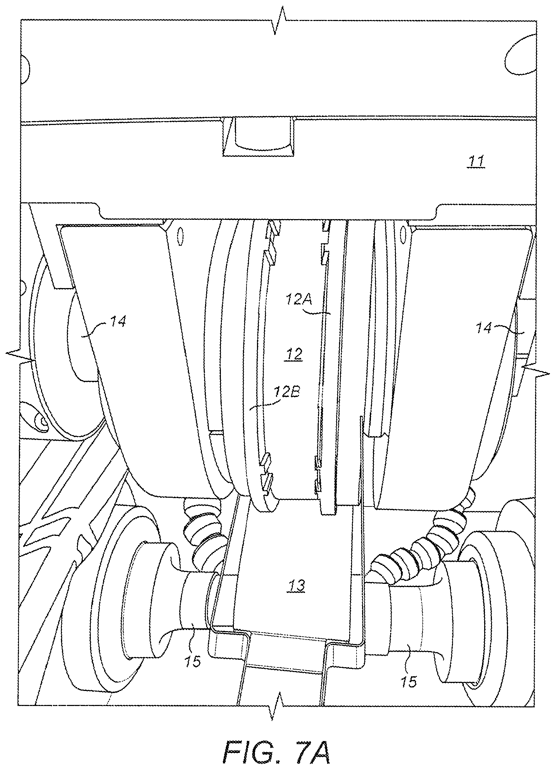

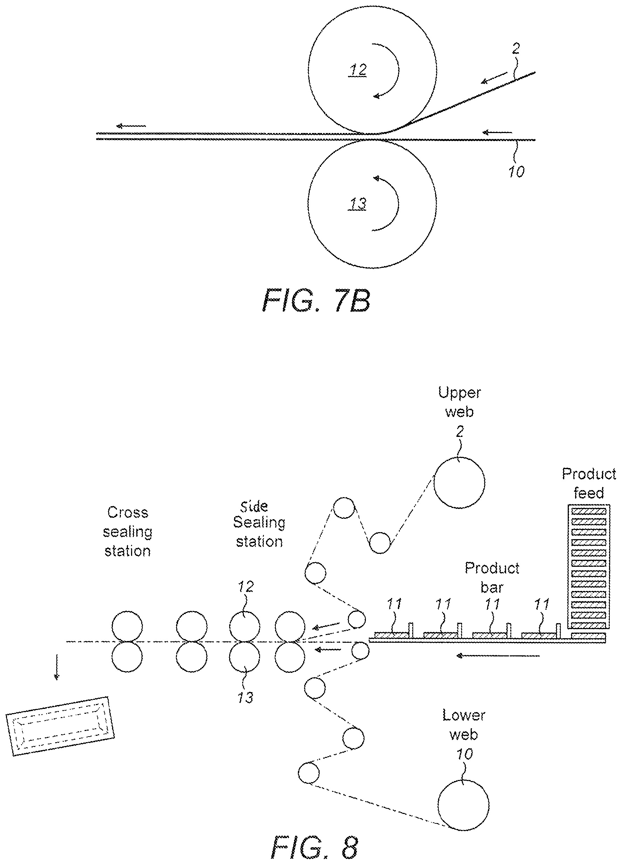

Figure 7A and Figure 7B show a perspective view, and a schematic side view respectively, of apparatus for ultrasonically welding the seals of the packaged food product described above. The apparatus is arranged for ultrasonically welding the parallel side seal portions (4) of the packaged food product between the first web of material (10) and the second web of material (2).

The apparatus (11) includes two separate rotary ultrasonic sealers which each comprise a rotary anvil part (12A,12B) and a rotary ultrasonic horn part (13) arranged to rotate in conjunction with the rotary anvil to form a respective one of the two parallel side seal portions (4) of the packaging. A single common rotary anvil wheel (12) is mounted upon an anvil rotation axis (14) about which the rotary anvil wheel is controlled to rotate by appropriately driving the anvil axis. Similarly, a common single ultrasonic horn wheel (13) is mounted upon a horn rotation axis (15) driven to control the rotation speed of the ultrasonic horn wheel. The anvil axis (14) is parallel to the horn axis (15) and the two are separated by a spacing sufficient to bring the rotary anvil into contact with the ultrasonic horn mutually tangentially (e.g. to osculate) as the two rotate in common. The speeds of rotation of the ultrasonic horn and ultrasonic anvil wheels are controlled such that the respective wheel surfaces meet tangentially at a common surface speed whereby the one does not drag across the other. Two separate and parallel annular anvil ridges (12A, 12B) circumscribe the outer cylindrical surface of the anvil wheel and are substantially identical in dimension and structure. Each has a radially outermost surface which is patterned with a knurled patterning comprising a multitude of spots. The patterned outermost anvil ridge surfaces are arranged in conjunction with the rotary anvil wheel (13) to form the weld pattern illustrated in Figure 5 comprising a multitude of weld spots. In this way, two separate ultrasonic sealers may be defined using a shared anvil wheel and ultrasonic horn wheel, and merely being separately defined by virtue of the separate raised anvil ridges (12A,12B). The rotary ultrasonic horn wheel is arranged to receive ultrasonic energy which causes the horn wheel to controllably radially expand and contract periodically at ultrasonic frequencies, and in cooperation with the ultrasonic anvils to transfer sufficient ultrasonic energy through the two webs of packaging material pinched between the anvil and horn to cause a localised heating, melting and welding of the two webs there.

As is schematically illustrated in Figure 7B, the rotary anvil wheel (12) and rotary ultrasonic horn (13) are arranged to rotate in opposite senses (the anvil wheel in a clockwise sense, for example, and the ultrasonic horn wheel in an anticlockwise sense) at a speed permitting a throughput of up to about 600 ft/min when the first web (10) and the second web (2) of material are simultaneously passed between the rotary anvil and rotary ultrasonic horn wheels in an overlapping arrangement. The two are bonded together along parallel ultrasonic seal lines defining the side seal portions (4) of the packaged product illustrated in Figure 1.

The separation between the nearmost opposing (inner) edges of the two separate patterned anvil ridges (12A, 12B) is chosen to slightly exceed the width of the slab of chocolate product (11) to be packaged. Furthermore, the uniform height, in common, of each of the two patterned anvil ridges is dimensioned to be slightly larger than the thickness of the slab of the food product intended to be passed between the ridges as the anvil wheel and ultrasonic horn wheel rotate as shown in Figure 7B.

In this way, when a slab of food product is conveyed upon an upper surface of the first web of packaging material (10) between the first and second anvil ridges of the anvil wheel, concurrently with the second web of material (2) placed over it, the two anvil ridges simultaneously and concurrently form the ultrasonic side seal portions (4) at substantially opposite sides of the slab of food product. The raised anvil ridges concurrently press the second web of material (2) down towards the generally flat first web of material (10) simultaneously and at opposite sides of the slab of food product such that any lateral force imparted upon the food product by downward movement of the second web due to one of the two anvil ridges is opposed and balanced by a concurrent transverse force (in the opposite direction) imparted by the separate and concurrent downward movement of the second web due to the other of the two anvil ridges. As a result, the food product slab can be relatively tightly wrapped by the very same operation which produces ultrasonic side seals substantially without any lateral movement in the position of the food product relative to the direction in which it is conveyed upon the lower, first web of material (10).

This production arrangement is schematically illustrated in Figure 8. The transverse or "cross" ultrasonic seals are formed by a second rotary ultrasonic anvil/horn pair ("Cross Sealing Station" 112B and 113B of Fig.8) possessing a series of separate patterned cross-seal anvil ridges (114) upstanding from the circumferential surface of the ultrasonic anvil 112A of the cross-sealing station and extending parallel to the rotation axis of the rotary anvil. The circumferential separation of successive such cross-seal anvil ridges is substantially the same as (slightly greater than) the length of the food product being wrapped. Thus, rotation of eth rotary cross-sealer anvil against the corresponding rotary ultrasonic horn 113B generates cross seals 5 at either end of the packaged product.

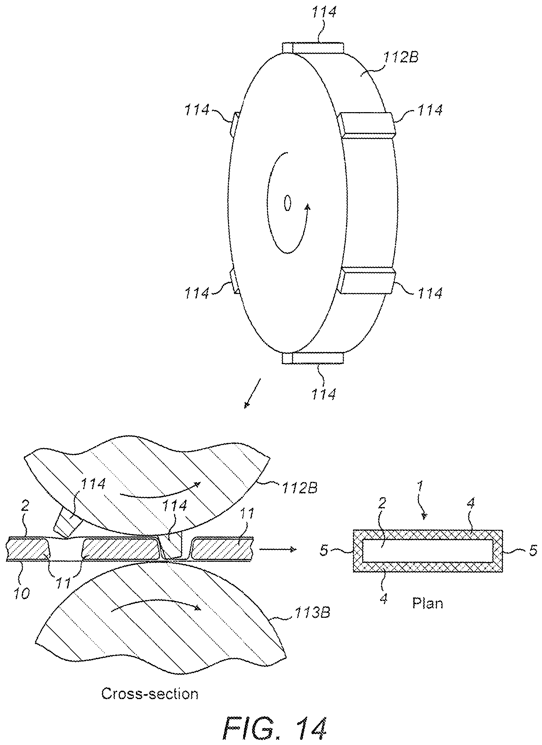

The wheels of the rotary cross-sealer station are designed in such a way that the food product will fit into a "pocket" between successive cross-seal anvil ridges as shown in Figure 14. Rotation of the rotary sealing apparatus and speed of conveyance of food-product upon webs to be sealed, is matched to ensure that the food product is accurately in the place between cross-seal ridges as sealing takes place, where it cannot be crushed. The product may be restrained from moving from the position by means of guides and overhead constrains.

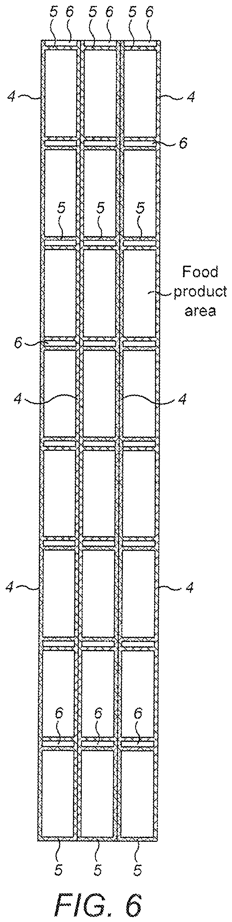

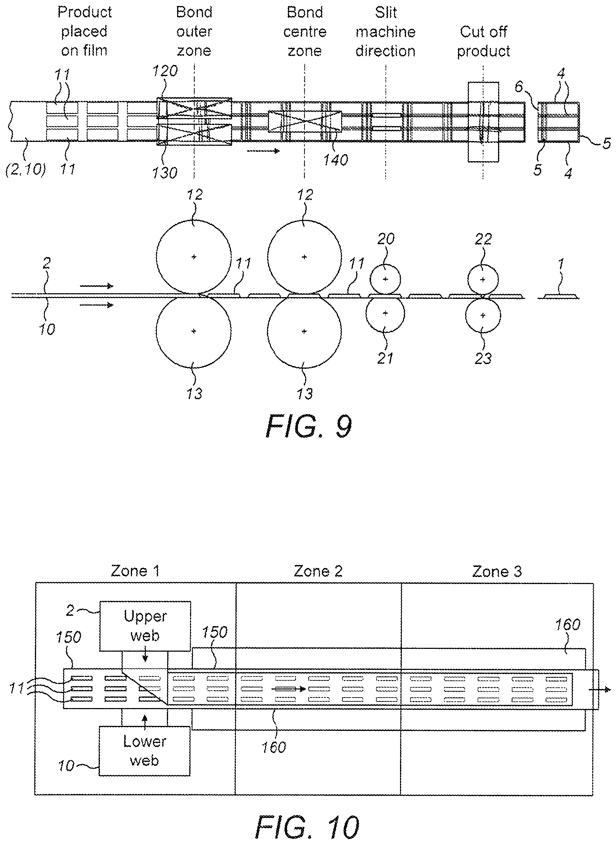

The schematic diagrams of Figures 9 and 10 illustrate the arrangement of elements of a continuous packaging production line system of the type illustrated in Figure 8, which is adapted to produce multiple parallel lanes of packaged food product within and between a common pair of first and second webs of packaging material (10, 2) such as is schematically illustrated in Figure 6.

In particular, referring to Figure 9, there is provided a production line assembly in which three lanes of food product packaging are provided. Groups of three food product slabs are arranged side by side along their long edges with terminal ends in register, and this three-fold grouping is repeated in uniformly spaced groups conveyed along a continuously unwound lower first web (10) of packaging material over which is continuously fed an upper web of second material (2) such that all are passed between an array of six rotary ultrasonic sealers (120, 130, 140). The six rotary ultrasonic sealers are arranged in pairs in the manner described and illustrated with reference to Figures 7A and 7B. This results in three separate ultrasonic sealer pairs (120, 130, 140) provided by three separate rotary anvil wheels (12) and corresponding rotary ultrasonic horn wheels (13). A first pair of rotary ultrasonic sealers (120) is arranged to produce parallel side seals (4) either side of one of the two outer lanes of the three lanes of food product (11), while a coaxial second pair of rotary ultrasonic sealers (130) is arranged simultaneously to form parallel ultrasonic side seals (4) either side of the other outer lane of food product (11) in the same upper and lower webs. Each ultrasonic anvil 12 possesses the aforesaid parallel two separate rotary ultrasonic sealers which each comprise a rotary anvil annular ridges (12A,12B) and a rotary ultrasonic horn part (13) arranged to rotate in conjunction with the rotary anvil to form a respective one of the two parallel side seal portions (4) of the packaging. Each anvil also comprises a set of the aforesaid cross-seal anvil ridges in combination with the annular ridges so that each anvil/horn paid provides and all-in-one side seal and cross-seal station. Positioned subsequently along the direction of conveyance of the food product, there is arranged a third pair of rotary ultrasonic sealers (140) arranged to form a third pair of side seals (4) either side of the middle lane of conveyed food product (11).

Slit apparatus (20, 21) and cut-off apparatus (22, 23) are subsequently sequentially arranged along the conveyor production line to respectively provide longitudinal cuts between the three conveyed rows of packaged food product, in parallel to the side seals of the middle lane of food product, and to cut the packaged food product transversely in parallel to the end seals, respectively, to provide separate packaged food products such as is illustrated in Figure 1.

Figure 10 schematically illustrates three separate processing zones in the conveyer production line apparatus described above. A first zone (zone 1) is located at the head of the conveyer apparatus and comprises an in-feed conveyer (150) upon which are arranged conveyed rows of food product (e.g. chocolate bar). Two independent films of packaging material are continuously unwound from separate respective rolls of webbing (Upper Web, Lower Web). Each roll of webbing material is positioned at a respective one of the two opposite sides of the in-feed conveyer, the webs being re-directed by webbing flow guide (not shown) to travel along the direction of flow of the convered food product on the in-feed conveyer. This hygienic design eliminates the need to have the webbing output/roll mechanisms placed above and below the in-feed conveyor. The lower film of first webbing material (10) is arranged to initially travel underneath and along the in-feed conveyor (150) upon which rows of food product (11) are initially conveyed, while the upper film of the second web is directed to travel in the direction of conveyance above and along the in-feed conveyor. Both of these films are subsequently caused to meet in zone 2 and subsequently to be subject to ultrasonic welding together in zone 3.

A second zone (zone 2) is provided with a means for placing the food product on the upper surface of the travelling first (lower) web of material. The film of first webbing material is introduced to an upper surface of a second in-feed conveyor (160) by being threaded through a small gap provided between the terminal end of the first in-feed conveyor (150) immediately adjacent the input end of the second in-feed conveyor. In this way the lower web of material is threaded from below the first in-feed conveyor, through the gap in question, and over the upper surface of the second in-feed conveyor in such a way that food product (11) conveyed by the first in-feed conveyor is directly placed upon the upper surface of the lower web of material as the product, and the lower web of material, are subsequently onwardly conveyed by the second in-feed conveyor (160). The positioning of the food product items (11) may be subsequently collated and appropriately positioned upon the lower web of material, and the second in-feed conveyor, using flow guide systems such as would be readily apparent to the skilled person.

Subsequently, in a third zone (zone 3), the sealing of the lower (10) and upper webs (2) of packaging material, and subsequent cutting of the sealed product package is undertaken. This is as described above with reference to Figure 9.

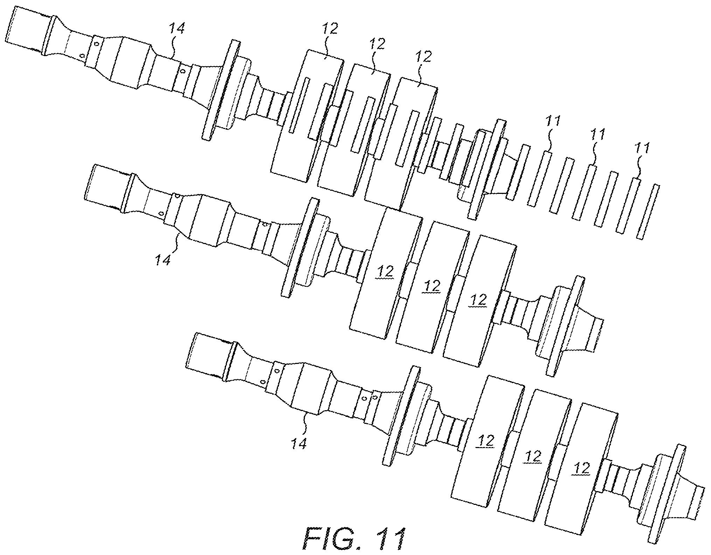

Figures 11, 12 and 13 provide schematic views of alternative spatial arrangements of ultrasonic sealers (provided as pairs upon a common ultrasonic anvil wheel) by which the number of product lanes may be increased from 3 to 17.

In particular, Figure 11 schematically illustrates the spatial orientation which may be provided by three separate arrays of six ultrasonic sealers in which each of the six grouped ultrasonic sealers are provided by three separate but coaxial rotary ultrasonic anvil/horn pairs each comprising two separate ultrasonic sealers in the manner illustrated in Figure 7A. The result is three groupings of six coaxial ultrasonic sealers. Each of the three separate coaxial ultrasonic sealers are arranged in succession along the direction of conveyance of the food product slabs (11) and each is transversely offset relative to the others.

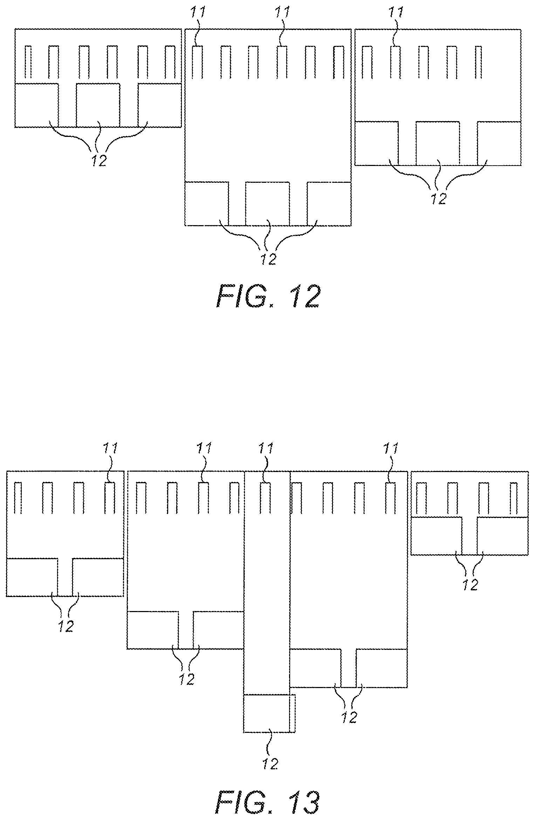

Figures 12 and 13 provide schematic views of alternative arrays of ultrasonic sealers for serving a 17-lane production lane.

Figure 15 schematically shows a longitudinal view (cross-section) of first and second wed of material joined at a common fold line, and a wrapped food product sealed along three sides, the fourth side comprising the fold line.

## Claims

1. Apparatus for ultrasonically welding a plurality of seals between a first web (10) of material and a second web (2) of material of food product packaging to form separate seals extending adjacent to opposite sides of a food product (11) to collectively wrap the food product (11) between the first web (10) and the second web (2), wherein the first and second webs are formed from separate webs and the wrapped food product is enclosed in a closed seal between the first web and the second web, thereby forming a food product package, whereby a surface area of the second web (2) exceeds a surface area of the first web (10) such that a greater proportion of the wrapped food product (11) is embraced by the second web than is embraced by the first web (10), the apparatus being **characterised in that** it comprises:
two separate ultrasonic sealers each comprising an anvil and an ultrasonic horn (13) arranged to operate in conjunction with the anvil to form concurrently a respective one of said separate seals when said first web (10) and said second web (2) are simultaneously passed between the anvil and the ultrasonic horn (13) of both said ultrasonic sealers,
wherein each of said two separate ultrasonic sealers is a rotary ultrasonic sealer comprising a rotary anvil and a rotary ultrasonic horn (13) arranged to rotate in conjunction with the rotary anvil to form a respective one of said separate seals,
wherein the two ultrasonic sealers are separated by a spacing arranged for receiving said food product (11) conveyed upon said first web (10) between said first web (10) and said second web (2) thereby to perform said welding at substantially opposite sides of the conveyed food product (11); and
an end-sealer for ultrasonically end-sealing said product packaging at opposite ends of the conveyed food product (11) comprising a rotary end-sealer anvil and a rotary end-sealer ultrasonic horn (13) arranged to rotate in conjunction with the rotary end-sealer anvil to form an end seal extending from one said seal to another adjacent to an end of said food product (11) when said first web (10) and said second web (2) are simultaneously passed between the rotary end-sealer anvil and the rotary end-sealer ultrasonic horn (13), said apparatus comprising a cut-off apparatus to cut the first and second webs in parallel to end seals formed by the end sealer
such that said food product package includes a peripheral edge portion (6) comprising adjacent tabs (9A, 9B) of said second web (2) and said first web (10) extending together outwardly from said seal and arranged to be manually separated by pealing apart to break said seal, and each of terminal tab sides of the adjacent tabs (9A, 9B) are ultrasonically sealed together while leaving terminal tab ends of the adjacent tabs (9A, 9B) free and unsealed at a terminal end portion of the packaging to be splayed for pealing apart.

2. Apparatus according to claim 1 in which said two separate ultrasonic horns (13) and/or ultrasonic anvils are arranged to form substantially mutually parallel said separate seals.

3. Apparatus for ultrasonically welding a seal between a first web (10) of material and a second web (2) of material of food product packaging to form a seal extending adjacent to a side of a food product (11) to collectively wrap the food product (11) between the first web (10) and the second web (2), thereby forming a food product package whereby a surface area of the second web (2) exceeds a surface area of the first web (10) such that a greater proportion of the wrapped food product (11) is embraced by the second web (2) than is embraced by the first web (10), the apparatus comprising:
means for forming the longitudinal fold in a common web such that said first web (10) of material and said second web (2) of material are formed from the common web within which they join at the longitudinal fold therein to overlap;
an ultrasonic sealer comprising an anvil and an ultrasonic horn (13) arranged to operate in conjunction with the anvil to form said seal when said first web (10) and said second web (2) are simultaneously passed between the anvil and the ultrasonic horn (13) of said ultrasonic sealer,
wherein the ultrasonic sealer is separated from said longitudinal fold by a spacing arranged for receiving said food product (11) conveyed upon said first web (10) between said first web (10) and said second web (2) thereby to perform said welding at a side of the conveyed food product (11) opposite to a side of the conveyed food product (11) at which the longitudinal fold is positioned; and
including an end-sealer for ultrasonically end-sealing said product packaging at opposite ends of the conveyed food product (11) comprising a rotary end-sealer anvil and a rotary end-sealer ultrasonic horn (13) arranged to rotate in conjunction with the rotary end-sealer anvil to form an end seal extending from said seal to said longitudinal fold adjacent to an end of said food product (11) when said first web (10) and said second web (2) are simultaneously passed between the rotary end-sealer anvil and the rotary end-sealer ultrasonic horn (13)
said apparatus being **characterised in that** it comprises:
a cut-off apparatus to cut the first and second webs in parallel to end seals formed by the end sealer such that said food product package includes a peripheral edge portion (6) comprising adjacent tabs (9A, 9B) of said second web (2) and said first web (10) extending together outwardly from said seal and arranged to be manually separated by pealing apart to break said seal, and each of terminal tab sides of the adjacent tabs (9A, 9B) are ultrasonically sealed together while leaving terminal tab ends of the adjacent tabs (9A, 9B) free and unsealed at a terminal end portion of the packaging to be splayed for pealing apart.

4. A method for ultrasonically packaging a food product (11), the method comprising:
conveying said food product (11) upon a first web (10) and between said first web (10) and a second web (2);
pressing said second web (2) towards said first web along one or more sides of said conveyed food product (11); simultaneously ultrasonically welding a plurality of seals between the first web (10) and the second web (2) to form separate seals extending adjacent to said opposite sides of the food product (11) to collectively wrap the food product (11) between the first web (10) and the second web (2) thereby forming a food product package;
ultrasonically welding said first web (10) to said second web (2) to form an end seal adjacent to opposite ends of the conveyed food product (11) extending from one said seal to another thereby to form a closed seal enclosing the wrapped food product between the first web (10) and the second web (2),
whereby a surface area of the second web (2) surrounded by said closed seal exceeds a surface area of the first web (10) surrounded by said closed seal such that a greater proportion of the wrapped food product (11) is embraced by the second web than is embraced by the first web (10), said method being **characterised by**:
cutting the first and second webs such that said food product package includes a peripheral edge portion (6) comprising adjacent tabs (9A, 9B) of said second web (2) and said first web (10) extending together outwardly from said seal and arranged to be manually separated by pealing apart to break said seal, and each of terminal tab sides of the adjacent tabs (9A, 9B) are ultrasonically sealed together while leaving terminal tab ends of the adjacent tabs (9A, 9B) free and unsealed at a terminal end portion of the packaging to be splayed for pealing apart.

5. A method for ultrasonically packaging a food product, the method comprising:
forming a longitudinal fold in a common web such that a first web (10) of material and a second web (2) of material are formed from the common web within which they join at the longitudinal fold therein to overlap;
conveying said food product (11) such that it resides upon a first web and between said first web (10) and a second web (2);
pressing said second web (2) towards said first web (10) along a side of said conveyed food product (11) opposite to the side thereof adjacent to the longitudinal fold; ultrasonically welding a seal between the first web (10) and the second web (2) to form a longitudinal seal extending adjacent to said side of the conveyed food product (11) collectively with said longitudinal fold to wrap the conveyed food product between the first web and the second web (2);
ultrasonically welding said first web (10) to said second web (2) to form an end seal adjacent to opposite ends of the conveyed food product (11) extending from said longitudinal seal to said longitudinal fold such that end seals and the longitudinal fold form a seal collectively surrounding the wrapped food product (11) sealed between the first web (10) and the second web (2),
thereby forming a food product package whereby a surface area of the second web (2) exceeds a surface area of the first web (10) such that a greater proportion of the wrapped food product (11) is embraced by the second web (2) than is embraced by the first web (10), said method being **characterised by**:
cutting the first and second webs such that said food product package includes a peripheral edge portion (6) comprising adjacent tabs (9A, 9B) of said second web (2) and said first web (10) extending together outwardly from said seal and arranged to be manually separated by pealing apart to break said seal, and each of terminal tab sides of the adjacent tabs (9A, 9B) are ultrasonically sealed together while leaving terminal tab ends of the adjacent tabs (9A, 9B) free and unsealed at a terminal end portion of the packaging to be splayed for pealing apart.

## Patentansprüche

1. Vorrichtung zum Ultraschallschweißen einer Vielzahl von Versiegelungen zwischen einer ersten Materialbahn (10) und einer zweiten Materialbahn (2) einer Lebensmittelproduktverpackung, um separate Versiegelungen zu bilden, die sich benachbart zu gegenüberliegenden Seiten eines Lebensmittelprodukts (11) erstrecken, um das Lebensmittelprodukt (11) gemeinsam zwischen der ersten Bahn (10) und der zweiten Bahn (2) zu umhüllen, wobei die erste und die zweite Bahn aus separaten Bahnen gebildet sind und das umhüllte Lebensmittelprodukt in einer geschlossenen Versiegelung zwischen der ersten Bahn und der zweiten Bahn umschlossen ist, wodurch eine Lebensmittelproduktverpackung gebildet wird, wobei ein Oberflächenbereich der zweiten Bahn (2) über einen Oberflächenbereich der ersten Bahn (10) auf derartige Weise hinausgeht, dass ein größerer Anteil des umhüllten Lebensmittelprodukts (11) von der zweiten Bahn umfasst wird als von der ersten Bahn (10) umfasst wird, wobei die Vorrichtung **dadurch gekennzeichnet ist, dass** sie umfasst:
zwei separate Ultraschallversiegler, jeweils umfassend einen Amboss und ein Ultraschallhorn (13), das dafür angeordnet ist, um in Verbindung mit dem Amboss zusammenzuarbeiten, um gleichzeitig eine jeweilige der separaten Versiegelungen zu bilden, wenn die erste Bahn (10) und die zweite Bahn (2) simultan zwischen dem Amboss und dem Ultraschallhorn (13) beider Ultraschallversiegler weitergeführt werden,
wobei jede der zwei separaten Ultraschallversiegler ein rotierender Ultraschallversiegler ist, umfassend einen rotierenden Amboss und ein rotierendes Ultraschallhorn (13), das dafür angeordnet ist, um sich in Verbindung mit dem rotierenden Amboss zu drehen, um eine jeweilige der separaten Versiegelungen zu bilden,
wobei die zwei Ultraschallversiegler durch einen Abstand getrennt sind, der zum Aufnehmen des auf der ersten Bahn (10) beförderten Lebensmittelprodukts (11) zwischen der ersten Bahn (10) und der zweiten Bahn (2) angeordnet ist, um dadurch das Schweißen an im Wesentlichen gegenüberliegenden Seiten des beförderten Lebensmittelprodukts (11) durchzuführen; und
einen Endversiegler zum Ultraschallendversiegeln der Produktverpackung an gegenüberliegenden Enden des beförderten Lebensmittelprodukts (11), umfassend einen rotierenden Endversiegleramboss und ein rotierendes Endversieglerultraschallhorn (13), das dafür angeordnet ist, um sich in Verbindung mit dem rotierenden Endversiegleramboss zu drehen, um eine Endversiegelung zu bilden, die sich von einer der Versiegelung zu einer anderen benachbarten zu einem Ende des Lebensmittelprodukts (11) erstreckt, wenn die erste Bahn (10) und die zweite Bahn (2) simultan zwischen dem rotierenden Endversiegleramboss und dem rotierenden Endversieglerultraschallhorn (13) weitergeführt werden, wobei die Vorrichtung eine Abschneidevorrichtung umfasst, um die erste und die zweite Bahn parallel zu Endversiegelungen, die durch den Endversiegler gebildet werden, auf derartige Weise zu schneiden, dass die Lebensmittelproduktverpackung einen Umfangskantenabschnitt (6) einschließt, umfassend benachbarte Laschen (9A, 9B) der zweiten Bahn (2) und der ersten Bahn (10), die sich zusammen von der Versiegelung nach außen erstrecken und angeordnet sind, um manuell durch Auseinanderziehen getrennt zu werden, um die Versiegelung zu brechen, und jede der Endanschlusslaschenseiten der benachbarten Laschen (9A, 9B) miteinander ultraschallversiegelt sind, während Endanschlusslaschenenden der benachbarten Laschen (9A, 9B) an einem Endanschlussendabschnitt der Verpackung, die zum Auseinanderziehen gespreizt werden soll, frei und nicht versiegelt gelassen sind.

2. Vorrichtung nach Anspruch 1, bei der die zwei separaten Ultraschallhörner (13) und/oder Ultraschallambosse angeordnet sind, um im wesentlichen parallel zueinander die separaten Versiegelungen zu bilden.

3. Vorrichtung zum Ultraschallschweißen einer Versiegelung zwischen einer ersten Materialbahn (10) und einer zweiten Materialbahn (2) einer Lebensmittelproduktverpackung, um eine Versiegelung zu bilden, die sich benachbart zu einer Seite eines Lebensmittelprodukts (11) erstreckt, um das Lebensmittelprodukt (11) gemeinsam zwischen der ersten Bahn (10) und der zweiten Bahn (2) zu umhüllen, wodurch eine Lebensmittelproduktverpackung gebildet wird, wobei ein Oberflächenbereich der zweiten Bahn (2) einen Oberflächenbereich der ersten Bahn (10) auf derartige Weise überschreitet, dass ein größerer Anteil des umhüllten Lebensmittelprodukts (11) von der zweiten Bahn (2) umfasst wird als von der ersten Bahn (10) umfasst wird, wobei die Vorrichtung umfasst:
Mittel zum Bilden der Längsfalte in einer gemeinsamen Bahn auf derartige Weise, dass die erste Materialbahn (10) und die zweite Materialbahn (2) aus der gemeinsamen Bahn gebildet werden, innerhalb dessen sie sich an der Längsfalte verbinden, um zu überlappen;
ein Ultraschallversiegler, umfassend einen Amboss und ein Ultraschallhorn (13), das dafür angeordnet ist, um in Verbindung mit dem Amboss zusammenzuarbeiten, um die Versiegelung zu bilden, wenn die erste Bahn (10) und die zweite Bahn (2) simultan zwischen dem Amboss und dem Ultraschallhorn (13) der Ultraschallschweißvorrichtung weitergeführt werden,
wobei der Ultraschallversiegler von der Längsfalte durch einen Abstand getrennt ist, der zum Aufnehmen des auf der ersten Bahn (10) beförderten Lebensmittelprodukts (11) zwischen der ersten Bahn (10) und der zweiten Bahn (2) angeordnet ist, um dadurch das Schweißen an einer Seite des beförderten Lebensmittelprodukts (11) gegenüber einer Seite des beförderten Lebensmittelprodukts (11), an der die Längsfalte positioniert ist, durchzuführen; und
einschließlich einem Endversiegler zum Ultraschallendversiegeln der Produktverpackung an gegenüberliegenden Enden des beförderten Lebensmittelprodukts (11), umfassend einen rotierenden Endversiegleramboss und ein rotierendes Endversieglerultraschallhorn (13), das dafür angeordnet ist, um in Verbindung mit dem rotierenden Endversiegleramboss zu rotieren, um eine Endversiegelung zu bilden, die sich von der Versiegelung zu der Längsfalte benachbart zu einem Ende des Lebensmittelprodukts (11) erstreckt, wenn die erste Bahn (10) und die zweite Bahn (2) simultan zwischen dem rotierenden Endversiegleramboss und dem rotierenden Endversieglerultraschallhorn (13) weitergeführt werden, wobei die Vorrichtung **dadurch gekennzeichnet ist, dass** sie umfasst:
eine Abschneidevorrichtung, um die erste und die zweite Bahn parallel zu Endversiegelungen, die durch den Endversiegler gebildet werden, auf derartige Weise zu schneiden, dass die Lebensmittelproduktverpackung einen Umfangskantenabschnitt (6) einschließt, umfassend benachbarte Laschen (9A, 9B) der zweiten Bahn (2) und der ersten Bahn (10), die sich zusammen von der Versiegelung nach außen erstrecken und angeordnet sind, um manuell durch Auseinanderziehen getrennt zu werden, um die Versiegelung zu brechen, und jede der Endanschlusslaschenseiten der benachbarten Laschen (9A, 9B) miteinander ultraschallversiegelt sind, während Endanschlusslaschenenden der benachbarten Laschen (9A, 9B) an einem Endanschlussendabschnitt der Verpackung, die zum Auseinanderziehen gespreizt werden soll, frei und nicht versiegelt gelassen sind.

4. Verfahren zum Ultraschallverpacken eines Lebensmittelprodukts (11), das Verfahren umfassend:
Befördern des Lebensmittelprodukts (11) auf einer ersten Bahn (10) und zwischen der ersten Bahn (10) und einer zweiten Bahn (2);
Pressen der zweiten Bahn (2) in Richtung der ersten Bahn entlang einer oder mehrerer Seiten des beförderten Lebensmittelprodukts (11);
simultanes Ultraschallschweißen einer Vielzahl von Versiegelungen zwischen der ersten Bahn (10) und der zweiten Bahn (2), um separate Versiegelungen zu bilden, die sich benachbart zu gegenüberliegenden Seiten des Lebensmittelprodukts (11) erstrecken, um das Lebensmittelprodukt (11) gemeinsam zwischen der ersten Bahn (10) und der zweiten Bahn (2) zu umhüllen, wodurch eine Lebensmittelproduktverpackung gebildet wird;
Ultraschallschweißen der ersten Bahn (10) an die zweite Bahn (2), um eine Endversiegelung benachbart zu gegenüberliegenden Enden des beförderten Lebensmittelprodukts (11) zu bilden, die sich von einer der Versiegelung zu einer anderen erstreckt, um dadurch eine geschlossene Versiegelung zu bilden, die das umhüllte Lebensmittelprodukt zwischen der ersten Bahn (10) und der zweiten Bahn (2) umschließt, wobei ein Oberflächenbereich der zweiten Bahn (2), der von der geschlossenen Versiegelung umgeben ist, einen Oberflächenbereich der ersten Bahn (10), der von der geschlossenen Versiegelung umgeben ist, auf derartige Weise überschreitet, dass ein größerer Anteil des umhüllten Lebensmittelprodukts (11) von der zweiten Bahn umfasst wird als von der ersten Bahn (10) umfasst wird, wobei das Verfahren **gekennzeichnet ist durch:**
Schneiden der ersten und der zweiten Bahn auf derartige Weise, dass die Lebensmittelproduktverpackung einen Umfangskantenabschnitt (6) einschließt, umfassend benachbarte Laschen (9A, 9B) der zweiten Bahn (2) und der ersten Bahn (10), die sich zusammen von der Versiegelung nach außen erstrecken und angeordnet sind, um manuell **durch** Auseinanderziehen getrennt zu werden, um die Versiegelung zu brechen, und jede der Endanschlusslaschenseiten der benachbarten Laschen (9A, 9B) miteinander ultraschallversiegelt sind, während Endanschlusslaschenenden der benachbarten Laschen (9A, 9B) an einem Endanschlussendabschnitt der Verpackung, die zum Auseinanderziehen gespreizt werden soll, frei und nicht versiegelt gelassen sind.

5. Verfahren zum Ultraschallverpacken eines Lebensmittelprodukts, das Verfahren umfassend:
Bilden einer Längsfalte in einer gemeinsamen Bahn auf derartige Weise, dass eine erste Materialbahn (10) und eine zweite Materialbahn (2) aus der gemeinsamen Bahn gebildet werden, innerhalb dessen sie sich an der Längsfalte verbinden, um zu überlappen;
Befördern des Lebensmittelprodukts (11) auf derartige Weise, dass es sich auf einer ersten Bahn und zwischen der ersten Bahn (10) und einer zweiten Bahn (2) befindet;
Pressen der zweiten Bahn (2) in Richtung der ersten Bahn (10) entlang einer Seite des beförderten Lebensmittelprodukts (11) gegenüber der Seite davon, benachbart zur Längsfalte; Ultraschallschweißen einer Versiegelung zwischen der ersten Bahn (10) und der zweiten Bahn (2), um eine Längsversiegelung zu bilden, die sich benachbart zu der Seite des beförderten Lebensmittelprodukts (11) zusammen mit der Längsfalte erstreckt, um das beförderte Lebensmittelprodukt zwischen der ersten Bahn und der zweiten Bahn (2) zu umhüllen;
Ultraschallschweißen der ersten Bahn (10) an die zweite Bahn (2), um eine Endversiegelung benachbart zu gegenüberliegenden Enden des beförderten Lebensmittelprodukts (11) zu bilden, die sich von der Längsversiegelung zu der Längsfalte auf derartige Weise erstreckt, dass Endversiegelungen und die Längsfalte eine Versiegelung bilden, die das umhüllte Lebensmittelprodukt (11), das zwischen der ersten Bahn (10) und der zweiten Bahn (2) versiegelt ist, umgeben, wodurch eine Lebensmittelproduktverpackung gebildet wird, wobei ein Oberflächenbereich der zweiten Bahn (2) einen Oberflächenbereich der ersten Bahn (10) auf derartige Weise überschreitet, dass ein größerer Anteil des umhüllten Lebensmittelprodukts (11) von der zweiten Bahn (2) umfasst wird als von der ersten Bahn (10) umfasst wird, wobei das Verfahren **gekennzeichnet ist durch:** Schneiden der ersten und der zweiten Bahn auf derartige Weise, dass die Lebensmittelproduktverpackung einen Umfangskantenabschnitt (6) einschließt, umfassend benachbarte Laschen (9A, 9B) der zweiten Bahn (2) und der ersten Bahn (10), die sich zusammen von der Versiegelung nach außen erstrecken und angeordnet sind, um manuell **durch** Auseinanderziehen getrennt zu werden, um die Versiegelung zu brechen, und jede der Endanschlusslaschenseiten der benachbarten Laschen (9A, 9B) miteinander ultraschallversiegelt sind, während Endanschlusslaschenenden der benachbarten Laschen (9A, 9B) an einem Endanschlussendabschnitt der Verpackung, die zum Auseinanderziehen gespreizt werden soll, frei und nicht versiegelt gelassen sind.

## Revendications

1. Appareil de soudage par ultrasons d'une pluralité de scellages entre une première bande (10) de matériau et une deuxième bande (2) de matériau d'emballage de produit alimentaire pour former des scellages séparés s'étendant adjacents à des côtés opposés d'un produit alimentaire (11) pour envelopper collectivement le produit alimentaire (11) entre la première bande (10) et la deuxième bande (2), dans lequel les première et deuxième bandes sont formées de bandes séparées et le produit alimentaire enveloppé est enfermée dans un scellage fermé entre la première bande et la deuxième bande, ce qui forme un emballage de produit alimentaire, moyennant quoi une superficie de la deuxième bande (2) dépasse une superficie de la première bande (10) de telle sorte qu'une plus grande proportion du produit alimentaire enveloppé (11) est entourée par la deuxième bande qu'elle n'est entourée par la première bande (10), l'appareil étant **caractérisé en ce qu'**il comprend :
deux dispositifs de scellage par ultrasons séparés comprenant chacun une enclume et un pavillon à ultrasons (13) agencé pour fonctionner conjointement avec l'enclume pour former simultanément un respectif desdits scellages séparés lorsque l'on fait passer ladite première bande (10) et ladite deuxième bande (2) simultanément entre l'enclume et le pavillon à ultrasons (13) de l'un et l'autre desdits dispositifs de scellage par ultrasons,
dans lequel chacun desdits deux dispositifs de scellage par ultrasons séparés est un dispositif de scellage par ultrasons rotatif comprenant une enclume rotative et un pavillon à ultrasons rotatif (13) agencé pour tourner conjointement avec l'enclume rotative pour former un respectif desdits scellages séparés,
dans lequel les deux dispositifs de scellage par ultrasons sont séparés par un espacement agencé pour recevoir ledit produit alimentaire (11) acheminé sur ladite première bande (10) entre ladite première bande (10) et ladite deuxième bande (2) pour mettre en œuvre de ce fait ledit soudage au niveau de côtés sensiblement opposés du produit alimentaire acheminé (11) ; et
un dispositif de scellage d'extrémité pour un scellage d'extrémité par ultrasons dudit emballage de produit au niveau d'extrémités opposées du produit alimentaire acheminé (11) comprenant une enclume rotative de dispositif de scellage d'extrémité et un pavillon à ultrasons rotatif de dispositif de scellage d'extrémité (13) agencé pour tourner conjointement avec l'enclume rotative de dispositif de scellage d'extrémité pour former un scellage d'extrémité s'étendant à partir de l'un dudit scellage à un autre adjacent à une extrémité dudit produit alimentaire (11) lorsque l'on fait passer ladite première bande (10) et ladite deuxième bande (2) simultanément entre l'enclume rotative de dispositif de scellage d'extrémité et le pavillon à ultrasons rotatif de dispositif de scellage d'extrémité (13), ledit appareil comprenant un appareil de découpe pour couper les première et deuxième bandes en parallèle à des scellages d'extrémité formés par le dispositif de scellage d'extrémité de telle sorte que ledit emballage de produit alimentaire inclut une partie de bord périphérique (6) comprenant des languettes adjacentes (9A, 9B) de ladite deuxième bande (2) et de ladite première bande (10) s'étendant conjointement vers l'extérieur à partir dudit scellage et agencées pour être manuellement séparées par pelage pour rompre ledit scellage, et chacun des côtés terminaux de languette des languettes adjacentes (9A, 9B) sont scellés conjointement par ultrasons tout en laissant les extrémités terminales de languette des languettes adjacentes (9A, 9B) libres et non scellées au niveau d'une partie d'extrémité terminale de l'emballage pour être écartées en vue d'un pelage.

2. Appareil selon la revendication 1 dans lequel lesdits deux pavillons à ultrasons (13) et/ou enclumes à ultrasons, séparés sont agencés pour former lesdits scellages séparés de façon sensiblement parallèle entre eux.

3. Appareil de soudage par ultrasons d'un scellage entre une première bande (10) de matériau et une deuxième bande (2) de matériau d'emballage de produit alimentaire pour former un scellage s'étendant adjacent à un côté d'un produit alimentaire (11) pour envelopper collectivement le produit alimentaire (11) entre la première bande (10) et la deuxième bande (2), ce qui forme un emballage de produit alimentaire moyennant quoi une superficie de la deuxième bande (2) dépasse une superficie de la première bande (10) de telle sorte qu'une plus grande proportion du produit alimentaire enveloppé (11) est entourée par la deuxième bande (2) qu'elle n'est entourée par la première bande (10), l'appareil comprenant :
un moyen pour former le pli longitudinal dans une bande commune de telle sorte que ladite première bande (10) de matériau et ladite deuxième bande (2) de matériau sont formées à partir de la bande commune au sein de laquelle elles se rejoignent au niveau du pli longitudinal en son sein pour se chevaucher ;
un dispositif de scellage par ultrasons comprenant une enclume et un pavillon à ultrasons (13) agencé pour fonctionner conjointement avec l'enclume pour former ledit scellage lorsque l'on fait passer ladite première bande (10) et ladite deuxième bande (2) simultanément entre l'enclume et le pavillon à ultrasons (13) dudit dispositif de scellage par ultrasons,
dans lequel le dispositif de scellage par ultrasons est séparé dudit pli longitudinal par un espacement agencé pour recevoir ledit produit alimentaire (11) acheminé sur ladite première bande (10) entre ladite première bande (10) et ladite deuxième bande (2) pour mettre en œuvre de ce fait ledit soudage au niveau d'un côté du produit alimentaire acheminé (11) opposé à un côté du produit alimentaire acheminé (11) au niveau duquel le pli longitudinal est positionné ; et
incluant un dispositif de scellage d'extrémité pour un scellage d'extrémité par ultrasons dudit emballage de produit au niveau d'extrémités opposées du produit alimentaire acheminé (11) comprenant une enclume rotative de dispositif de scellage d'extrémité et un pavillon à ultrasons rotatif de dispositif de scellage d'extrémité (13) agencé pour tourner conjointement avec l'enclume rotative de dispositif de scellage d'extrémité pour former un scellage d'extrémité s'étendant dudit scellage audit pli longitudinal adjacent à une extrémité dudit produit alimentaire (11) lorsque l'on fait passer ladite première bande (10) et ladite deuxième bande (2) simultanément entre l'enclume rotative de dispositif de scellage d'extrémité et le pavillon à ultrasons rotatif de dispositif de scellage d'extrémité (13) ledit appareil étant **caractérisé en ce qu'il** comprend :
un appareil de découpe pour couper les première et deuxième bandes en parallèle à des scellages d'extrémité formés par le dispositif de scellage d'extrémité de telle sorte que ledit emballage de produit alimentaire inclut une partie de bord périphérique (6) comprenant des languettes adjacentes (9A, 9B) de ladite deuxième bande (2) et de ladite première bande (10) s'étendant conjointement vers l'extérieur à partir dudit scellage et agencées pour être séparées manuellement par pelage pour rompre ledit scellage, et chacun des côtés terminaux de languette des languettes adjacentes (9A, 9B) sont scellés l'un à l'autre par ultrasons tout en laissant les extrémités terminales de languette des languettes adjacentes (9A, 9B) libres et non scellées au niveau d'une partie d'extrémité terminale de l'emballage pour être écartées en vue d'un pelage.

4. Procédé d'emballage par ultrasons d'un produit alimentaire (11), le procédé comprenant :
l'acheminement dudit produit alimentaire (11) sur une première bande (10) et entre ladite première bande (10) et une deuxième bande (2) ;
le pressage de ladite deuxième bande (2) en direction de ladite première bande le long d'un ou plusieurs côtés dudit produit alimentaire acheminé (11) ;
le soudage par ultrasons simultané d'une pluralité de scellages entre la première bande (10) et la deuxième bande (2) pour former des scellages séparés s'étendant adjacents auxdits côtés opposés du produit alimentaire (11) pour envelopper collectivement le produit alimentaire (11) entre la première bande (10) et la deuxième bande (2) ce qui forme un emballage de produit alimentaire ;
le soudage par ultrasons de ladite première bande (10) à ladite deuxième bande (2) pour former un scellage d'extrémité adjacent à des extrémités opposées du produit alimentaire acheminé (11) s'étendant partir dudit scellage à un autre pour former de ce fait un scellage fermé enfermant le produit alimentaire enveloppé entre la première bande (10) et la deuxième bande (2), moyennant quoi une superficie de la deuxième bande (2) entourée par ledit scellage fermé dépasse une superficie de la première bande (10) entourée par ledit scellage fermé de telle sorte qu'une plus grande proportion du produit alimentaire enveloppé (11) est entourée par la deuxième bande qu'elle n'est entourée par la première bande (10), ledit procédé étant **caractérisé par** :
la découpe des première et deuxième bandes de telle sorte que ledit emballage de produit alimentaire inclut une partie de bord périphérique (6) comprenant des languettes adjacentes (9A, 9B) de ladite deuxième bande (2) et de ladite première bande (10) s'étendant conjointement vers l'extérieur à partir dudit scellage et agencées pour être séparées manuellement par pelage pour rompre ledit scellage, et chacun des côtés terminaux de languette des languettes adjacentes (9A, 9B) sont scellés l'un à l'autre par ultrasons tout en laissant les extrémités terminales de languette des languettes adjacentes (9A, 9B) libres et non scellées au niveau d'une partie d'extrémité terminale de l'emballage pour être écartées en vue d'un pelage.

5. Procédé d'emballage par ultrasons d'un produit alimentaire, le procédé comprenant :
la formation d'un pli longitudinal dans une bande commune de telle sorte qu'une première bande (10) de matériau et une deuxième bande (2) de matériau sont formées à partir de la bande commune au sein de laquelle elles se rejoignent au niveau du pli longitudinal en son sein pour se chevaucher ;
l'acheminement dudit produit alimentaire (11) de telle sorte qu'il se trouve sur une première bande et entre ladite première bande (10) et une deuxième bande (2) ;
le pressage de ladite deuxième bande (2) en direction de ladite première bande (10) le long d'un côté dudit produit alimentaire acheminé (11) opposé au côté de celui-ci adjacent au pli longitudinal ; le soudage par ultrasons d'un scellage entre la première bande (10) et la deuxième bande (2) pour former un scellage longitudinal s'étendant adjacent audit côté du produit alimentaire acheminé (11) collectivement avec ledit pli longitudinal pour envelopper le produit alimentaire acheminé entre la première bande et la deuxième bande (2) ;
le soudage par ultrasons de ladite première bande (10) à ladite deuxième bande (2) pour former un scellage d'extrémité adjacent à des extrémités opposées du produit alimentaire acheminé (11) s'étendant dudit joint longitudinal audit pli longitudinal de telle sorte que les scellages d'extrémité et le pli longitudinal forment un scellage entourant collectivement le produit alimentaire enveloppé (11) scellé entre la première bande (10) et la deuxième bande (2), ce qui forme un emballage de produit alimentaire moyennant quoi une superficie de la deuxième bande (2) dépasse une superficie de la première bande (10) de telle sorte qu'une plus grande proportion du produit alimentaire enveloppé (11) est entourée par la deuxième bande (2) qu'elle n'est entourée par la première bande (10), ledit procédé étant **caractérisé par :** la découpe des première et deuxième bandes de telle sorte que ledit emballage de produit alimentaire inclut une partie de bord périphérique (6) comprenant des languettes adjacentes (9A, 9B) de ladite deuxième bande (2) et de ladite première bande (10) s'étendant conjointement vers l'extérieur à partir dudit scellage et agencées pour être séparées manuellement par pelage pour rompre ledit scellage, et chacun des côtés terminaux de languette des languettes adjacentes (9A, 9B) sont scellés l'un à l'autre par ultrasons tout en laissant les extrémités terminales de languette des languettes adjacentes (9A, 9B) libres et non scellées au niveau d'une partie d'extrémité terminale de l'emballage pour être écartées en vue d'un pelage.
